# FASCICULE DE BREVET EUROPEEN

(11) **EP 1 841 616 B1**
(45) Date de publication et mention de la délivrance du brevet: **21.12.2016**
(21) Numéro de dépôt: 06709436.7
(22) Date de dépôt: 25.01.2006
(51) Int. Cl.: B60L 9/30, H01F 27/30

(54) **TRANSFORMATEUR POUR VÉHICULE MOTEUR MULTICOURANT**
TRANSFORMATOR FÜR MEHRFACHSTROMFAHRZEUG
TRANSFORMER FOR MULTICURRENT MOTOR VEHICLE

(30) Priorité: 27.01.2005 FR 0550229
(43) Date de publication de la demande: 10.10.2007
(73) Titulaire: ALSTOM Grid SAS, 92907 Paris la Défense Cédex (FR)
(72) Inventeur: CHEMIN, Eric, F-69200 Venissieux (FR); DEVAUX, François, F-94100 Saint Maur Des Fosses (FR); EL-BRIGHLI, Abdelillah, F-95260 Beaumont-sur-oise (FR); PERROT, François, F-92110 Clichy (FR); PRINS, Jan, 34718 Kadikoy (TR); RIBOUD, Jean Christophe, F-75018 Paris (FR)
(74) Mandataire: Lavoix
(86) Numéro de dépôt international: PCT/FR2006/050052
(87) Numéro de publication internationale: WO 2006/079744

(56) Documents cités:
- EP-A- 0 216 500
- EP-A- 1 052 136
- EP-A- 1 315 180
- DE-A1- 3 817 652

## Description

### DOMAINE TECHNIQUE

La présente invention concerne un transformateur pour véhicule moteur multicourant appelé transformateur de lissage.

### ÉTAT DE LA TECHNIQUE ANTÉRIEURE

Les véhicules moteurs multicourants sont utilisés lorsque cohabitent des alimentations en énergie avec diverses tensions et/ou fréquences. Sur le continent européen, des tensions d'alimentation alternatives de 25 kV/50Hz ou 15 kV/16,7 Hz peuvent être utilisées ainsi que des tensions continues de 3kV ou 1,5kV. Sur d'autres continents, les réseaux peuvent présenter d'autres combinaisons de tensions.

Ces véhicules comportent un transformateur qui, en mode alternatif, transforme la tension apportée par une caténaire en une tension de valeur appropriée appliquée à au moins un circuit de régulation et de commande d'au moins un moteur, l'ensemble allant du circuit de régulation et de commande au moteur formant une chaîne de traction. Ce circuit de régulation et de commande comporte des commutateurs à semi-conducteur qui sont commutés selon des impulsions déterminées et qui reçoivent des courants à partir de l'alimentation de la caténaire.

En mode continu, la tension continue apportée par la caténaire est appliquée au circuit de régulation et de commande par l'intermédiaire d'un filtre de lissage. Ce filtre de lissage est destiné à régulariser le courant continu soutiré à la caténaire qui comprend, superposé à la composante continue, inévitablement des composantes alternatives causes d'ondulations. Ces ondulations peuvent être présentes soit parce que le courant continu délivré a été redressé, soit parce que celui-ci présente des harmoniques induits ou natifs. Ce filtre de lissage comprend au moins une bobine de filtrage. Le filtrage sert à éviter que des perturbations de commutation et des oscillations trop importantes soient provoquées dans le courant de retour par les rails.

Le transformateur comporte au moins une paire primaire-secondaire. Par paire primaire-secondaire on entend une paire formée d'un circuit d'entrée ou primaire formé d'au moins un enroulement primaire et d'un circuit de sortie ou secondaire formé d'au moins un enroulement secondaire. Dans la suite on emploiera l'expression paire primaire-secondaire.

Le transformateur représente la masse la plus importante du véhicule moteur et son volume est important. Les enroulements primaire et secondaire sont classiquement utilisés en alimentation alternative. On cherche pour réduire les masses et le volume à utiliser le plus possible de composants du transformateur en mode continu. De plus, le transformateur étant rempli de diélectrique caloriporteur de type huile minérale, ester synthétique ou naturel, huile silicone ou autre, la réduction du volume offre l'avantage de réduire l'impact environnemental de l'appareil tout au long de son cycle de vie. Plusieurs voies ont été examinées pour atteindre cet objectif.

Dans le brevet européen EP-1 315 180, qui décrit le préambule de la revendication 1, on utilise en mode continu un enroulement secondaire fonctionnant comme une bobine dans l'air, c'est-à-dire dont le noyau est saturé par le courant continu, au moins en partie, en temps que bobine de filtrage. L'inconvénient de cette structure est que la valeur de l'inductance varie fortement avec le courant. De plus les caractéristiques physiques de cette bobine avec noyau généralement en fer ne sont pas toujours compatibles avec le circuit de régulation et de commande de la chaîne de traction.

Une autre solution est décrite dans la demande de brevet EP-1 052 136. L'enroulement secondaire comporte un enroulement principal en série avec une bobine d'inductance secondaire pour obtenir en mode alternatif une valeur d'impédance appropriée. Cette bobine secondaire contribue à augmenter l'impédance en mode alternatif. C'est cette bobine secondaire qui va faire office en mode continu de bobine de filtrage, elle est reliée électriquement à la caténaire apportant le courant continu. Pour utiliser ce principe, il est nécessaire d'avoir une bonne adéquation entre les valeurs de courant et d'inductance nécessaires dans les deux modes d'alimentation. D'autre part, dans la plupart des transformateurs, la valeur de l'inductance de fuite appropriée est atteinte sans avoir besoin d'ajouter la bobine secondaire.

Dans la demande de brevet DE-38 17 652, une bobine de filtrage se trouvant dans le circuit de régulation et de commande en mode alternatif est utilisée en mode continu en tant que bobine de lissage et elle est montée en série avec l'enroulement secondaire du transformateur. L'enroulement primaire du transformateur est en court-circuit. Cette configuration souffre d'un manque de flexibilité car les composants sont conçus pour le mode alternatif puis réutilisés tels quels dans le mode continu et les valeurs des inductances de l'enroulement secondaire et de la bobine de filtrage sont trop faibles par rapport à ce qui serait nécessaire pour être efficace en mode continu.

### EXPOSÉ DE L'INVENTION

La présente invention a justement comme but de proposer un transformateur pour véhicule moteur dont des composants utilisés en mode alternatif pourront être utilisés en mode continu et qui ne présente pas les inconvénients évoqués ci-dessus à savoir pas d'incompatibilité avec le circuit de régulation et de commande de la chaîne de traction avec laquelle le transformateur coopère, pas de nécessité d'avoir une bonne adéquation entre les valeurs de courant et d'inductance dans les modes continu et alternatif, pas de composants mal adaptés au mode continu.

Pour y parvenir la présente invention propose un transformateur pour véhicule moteur comportant au moins une paire primaire-secondaire dont le secondaire comporte au moins un enroulement secondaire de traction destiné à être relié aux bornes d'un circuit de régulation et de commande du moteur du véhicule. Le secondaire comporte de plus un enroulement secondaire supplémentaire configuré en circuit ouvert avec une extrémité reliée à un potentiel de masse ou destiné à être connecté à une charge, en mode alternatif alors que le primaire est alimenté en courant alternatif et configuré en court-circuit en mode continu alors que l'enroulement secondaire de traction est alimenté en courant continu et que le primaire est configuré en circuit ouvert. Cet enroulement secondaire supplémentaire en coopérant avec l'enroulement secondaire de traction génère une inductance de fuite qui a un rôle d'inductance de lissage d'ondulations affectant le courant continu.

Cet enroulement secondaire supplémentaire est principalement conçu pour le mode continu.

Le transformateur peut ainsi être utilisé dans les deux modes de fonctionnement sans à avoir à faire appel à des parties actives, externes au transformateur, placées à l'intérieur ou à l'extérieur de la cuve du transformateur. Ces composants utilisés seulement dans un des modes augmentent la masse, l'encombrement et le coût.

La technologie de bobinage des enroulements du transformateur n'est pas modifiée par rapport au passé avec l'introduction de l'enroulement secondaire supplémentaire.

Le fait d'utiliser l'inductance de fuite au lieu de l'inductance dans l'air permet d'obtenir une valeur d'inductance de lissage pratiquement indépendante du courant continu de ligne, ce qui ne génère pas d'instabilité dans le circuit de régulation et de commande.

Si nécessaire pour augmenter la valeur de l'inductance de lissage, une bobine d'inductance complémentaire peut être montée en série avec l'enroulement secondaire supplémentaire.

De préférence, la bobine d'inductance complémentaire est linéaire.

La paire primaire-secondaire est bobinée autour d'un circuit magnétique commun, la bobine d'inductance complémentaire n'étant pas bobinée autour du circuit magnétique commun.

La paire primaire-secondaire est contenue ainsi que la bobine d'inductance complémentaire dans une cuve en un matériau ayant de préférence une perméabilité magnétique élevée tel que l'acier pour minimiser la quantité de flux magnétique rayonné vers l'extérieur.

On prévoit un contacteur monté en série avec l'enroulement secondaire supplémentaire pour passer du circuit ouvert au court-circuit.

Le transformateur peut être de type colonne avec les enroulements de la paire primaire-secondaire bobinés concentriquement, l'enroulement primaire étant bobiné autour de l'enroulement secondaire de traction ou inversement.

L'enroulement secondaire supplémentaire peut être bobiné autour de l'enroulement secondaire de traction et/ou autour de l'enroulement primaire.

L'enroulement secondaire supplémentaire peut être entouré par l'enroulement secondaire de traction et/ou l'enroulement primaire.

En variante ou en combinaison, l'enroulement secondaire supplémentaire peut être inséré entre l'enroulement secondaire de traction et l'enroulement primaire.

Le transformateur peut être de type alterné ou cuirassé, dans cette configuration la paire primaire-secondaire est de type empilé, l'enroulement secondaire de traction s'étendant de part et d'autre de l'enroulement primaire.

L'enroulement secondaire supplémentaire peut s'étendre de part et d'autre de l'enroulement secondaire de traction et/ou de part et d'autre de l'enroulement primaire, entre l'enroulement primaire et l'enroulement secondaire de traction.

On prévoit un contacteur relié à l'enroulement primaire pour réaliser la configuration en circuit ouvert.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
les figures 1A, 1B, 1C montrent respectivement un circuit d'alimentation d'un véhicule moteur incluant un transformateur selon l'invention fonctionnant en mode alternatif (figures 1A, 1B) et en mode continu (figure 1C) ;
les figures 2A à 2D montrent diverses configurations d'un transformateur colonne selon l'invention ;
les figures 3A, 3B montrent diverses configurations d'un transformateur alterné ou cuirassé selon l'invention ;
la figure 4 montre une coupe d'un transformateur selon l'invention à quatre paires primaire-secondaire ;
les figures 5A à 5D montrent les branchements soustractif et additif d'enroulements secondaires de traction ainsi que les flux magnétiques établis dans le transformateur de la figure 4 selon que ces flux se retranchent ou s'additionnent;
les figures 6A, 6B montrent l'identité ou la quasi identité des valeurs d'inductances en fonction du courant selon que le transformateur alimente une ou plusieurs chaînes de traction.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

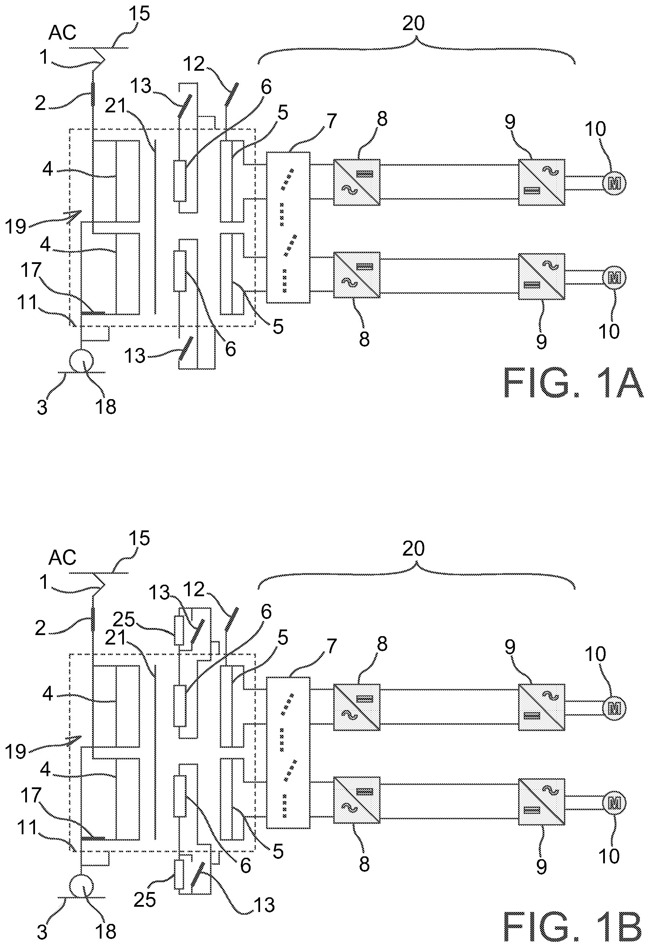

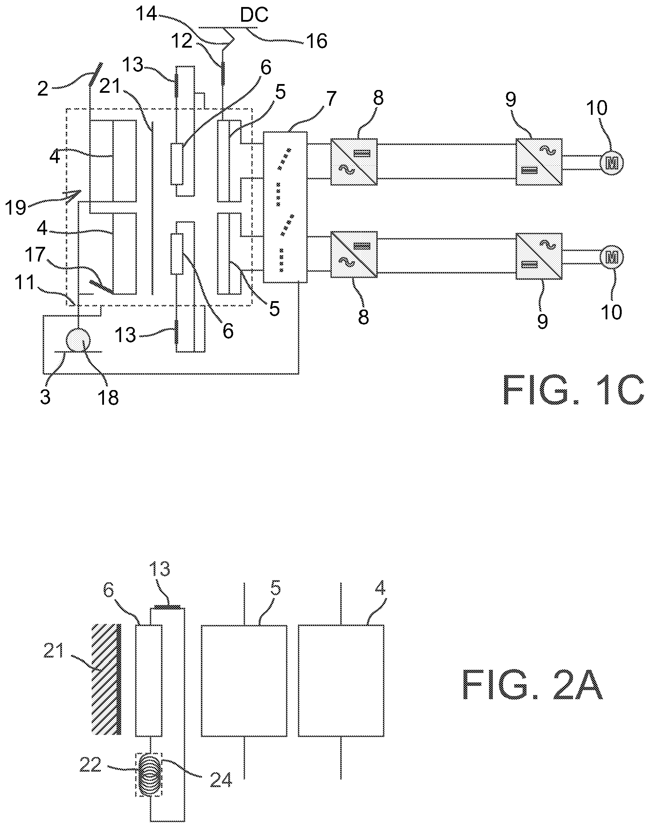

Les figures 1A, 1B, 1C montrent un circuit d'alimentation d'un ou plusieurs moteurs 10 d'un véhicule moteur fonctionnant respectivement en mode alternatif et en mode continu.

Ce circuit d'alimentation est destiné à être relié électriquement d'une part à une caténaire 15, 16 apportant respectivement soit du courant alternatif, soit du courant continu et d'autre part à un rail 3 sur lequel roule le véhicule dont une roue 18 est schématisée. Au lieu de se faire par le rail, le retour du courant pourrait se faire par tout autre dispositif approprié.

Le circuit d'alimentation placé en amont du moteur 10 comporte un transformateur 19 objet de l'invention qui alimente un circuit de régulation et de commande 20. Le transformateur 19 selon l'invention comporte au moins une paire primaire-secondaire bobinée sur un circuit magnétique commun 21. Le primaire comporte un enroulement primaire 4. Le secondaire comporte au moins un enroulement secondaire de traction 5 et un enroulement secondaire supplémentaire 6 dont on va voir la fonction et le branchement par la suite. Cet enroulement secondaire supplémentaire 6 est conçu principalement pour le mode continu. Sur les figures 1A, 1B, 1C on a représenté deux paires primaire-secondaire. La référence 11 représente une cuve dans laquelle se trouvent les paires primaire-secondaire du transformateur ainsi que le circuit magnétique commun 21. Cette cuve 11 contient généralement un liquide de refroidissement diélectrique tel de l'huile.

Le circuit de régulation et de commande 20 peut comporter un unique bloc de configuration 7 apte à connecter tout ou partie des enroulements secondaires de traction des différentes paires primaire-secondaire de façon indépendante, soit en série soit en parallèle. On verra par la suite quel en est l'intérêt. Les deux extrémités des enroulements secondaires de traction 5 sont reliées au bloc de configuration 7. Ce bloc de configuration 7 alimente pour chaque moteur 10 une cascade avec un redresseur 8 et un onduleur 9, le redresseur 8 étant en amont de l'onduleur 9, ce dernier étant relié au moteur 10. En mode continu, au choix du constructeur du circuit de régulation et de commande et en fonction des solutions techniques adoptées, le redresseur peut ou non être traversé par le courant continu de ligne.

En mode alternatif (figures 1A, 1B), côté primaire 4 le transformateur est électriquement relié d'une part à la caténaire alternative 15 par l'intermédiaire d'un pantographe 1 et d'autre part au rail 3. Un disjoncteur 2 est monté entre le pantographe 1 et une extrémité des enroulements primaires 4. Il est fermé dans ce mode alternatif. L'autre extrémité de l'enroulement primaire 4 est reliée électriquement au rail par l'intermédiaire d'une roue 18 du véhicule. Lorsqu'il y a plusieurs paires primaire-secondaire, il peut y avoir plusieurs enroulements primaires 4 qui sont montés en parallèle. Dans une autre configuration, on pourrait avoir un enroulement primaire 4 commun à plusieurs paires primaire-secondaire.

Côté secondaire, les deux extrémités de l'enroulement secondaire de traction 5 sont reliées électriquement au circuit de régulation et de commande 20 et plus précisément au bloc de configuration 7. Lorsqu'il y a plusieurs paires primaire-secondaire, il y a plusieurs enroulements secondaires de traction qui sont indépendants en mode alternatif.

Sur la figure 1A, l'enroulement secondaire supplémentaire 6 forme un circuit ouvert grâce à un contacteur 13. L'une de ses extrémités est reliée à la masse qui est matérialisée par le rail 3 par l'intermédiaire de la cuve 11 et/ou de la roue 18. Dans cette configuration en mode alternatif, l'enroulement secondaire supplémentaire 6 ne sert pas. Le nombre d'enroulements secondaires supplémentaires est égal au nombre de chaînes de traction.

On peut envisager comme sur la figure 1B, d'utiliser l'enroulement secondaire supplémentaire 6 en mode alternatif. Il peut alimenter une charge externe 25. Dans ce cas ses caractéristiques correspondraient à celles d'un enroulement auxiliaire. Cette charge 25 peut servir à faire du chauffage ou du filtrage par exemple. Dans cette configuration, le contacteur 13 est monté en parallèle avec la charge 25 et il est ouvert. L'enroulement secondaire supplémentaire 6 débite sur la charge 25. Le contacteur 13 sera fermé en mode continu qui est décrit par la suite. Il court-circuite la charge et l'enroulement secondaire supplémentaire.

En mode continu (figure 1C), côté primaire le transformateur 19 n'est plus relié à la caténaire alternative 15 et le disjoncteur 2 est ouvert. L'enroulement primaire 4 forme un circuit ouvert grâce à la présence d'au moins un contacteur 17 qui est ouvert dans ce mode et fermé dans le mode alternatif. Ce contacteur est de préférence placé du côté neutre du primaire pour minimiser sa taille. L'autre côté du primaire 4 est appelé côté ligne.

Côté secondaire, l'enroulement secondaire de traction 5 est toujours relié par ses deux extrémités au bloc de configuration 7. Lorsqu'il y a plusieurs enroulements secondaires de traction, le bloc de configuration 7 permet une connexion des enroulements secondaires de traction de manière indépendante, en série ou en parallèle. Mais maintenant, il est également relié électriquement à la caténaire 16 délivrant le courant continu de ligne par l'intermédiaire d'un pantographe 14. Un disjoncteur 12 est inséré entre le pantographe 14 et une extrémité de l'enroulement secondaire de traction 5. Lorsqu'il y a plusieurs paires primaire-secondaire et donc plusieurs enroulements secondaires de traction 5 un seul disjoncteur 12 peut suffire. Sur les figures 1, seul un enroulement secondaire de traction est montré comme étant relié au disjoncteur, la connexion de l'autre enroulement secondaire de traction n'est pas schématisée, elle se fait via le bloc de configuration 7.

L'enroulement secondaire supplémentaire 6 est court-circuité, le contacteur 13 est fermé.

L'enroulement secondaire supplémentaire 6 est suffisamment découplé de l'enroulement secondaire de traction 5 avec lequel il coopère et donc suffisamment éloigné de ce dernier de manière à obtenir une inductance de fuite suffisamment importante entre l'enroulement secondaire de traction 5 et l'enroulement secondaire supplémentaire 6. On cherche à ce que la valeur de l'inductance de fuite obtenue soit celle qui convient pour filtrer les ondulations inévitables dans le courant continu de ligne délivré par la caténaire 16.

Le fait d'utiliser le phénomène d'inductance de fuite entre deux enroulements d'un transformateur, qui est un phénomène intrinsèque du transformateur, permet que cette inductance soit faiblement influencée par la valeur du courant qui circule dans les enroulements secondaires de traction 5. Dans l'art antérieur illustré par le brevet européen EP 1 315 180 l'utilisation de l'inductance dans l'air du secondaire du transformateur en tant qu'inductance de lissage entraîne une forte variation de la valeur de l'inductance en fonction de la valeur du courant depuis l'inductance magnétisante pour un courant proche de zéro jusqu'à l'inductance dans l'air pour un courant qui sature les matériaux magnétiques associés au secondaire.

L'enroulement secondaire de traction 5 est dimensionné thermiquement pour atteindre les performances que l'on attend de lui en mode alternatif. Il suffira de vérifier que les contraintes thermiques auxquelles il va être soumis en mode continu sont compatibles avec celles requises en mode alternatif.

L'enroulement secondaire supplémentaire 6 est dimensionné thermiquement pour le courant correspondant à l'ondulation, c'est-à-dire à la composante alternative qui est superposée à la composante continue du courant continu de ligne délivré par la caténaire continue 16.

Il est positionné suffisamment éloigné de l'enroulement secondaire de traction et sa forme est étudiée de manière à obtenir la valeur d'inductance de fuite recherchée. On rappelle que l'inductance de fuite obtenue entre deux enroulements dépend de la géométrie relative de ces enroulements ainsi que du nombre de spires.

La tension assignée aux bornes de l'enroulement secondaire supplémentaire est définie par le constructeur de manière à faciliter la construction des enrouements et à minimiser le dimensionnement du contacteur 13 de mise en court-circuit ou en circuit ouvert. Cette valeur est suffisamment faible devant la tension aux bornes de l'enroulement secondaire de traction dans le mode alternatif. Cette valeur n'a pas d'influence sur l'impédance recherchée issue de l'inductance de fuite entre enroulement secondaire de traction et enroulement secondaire supplémentaire.

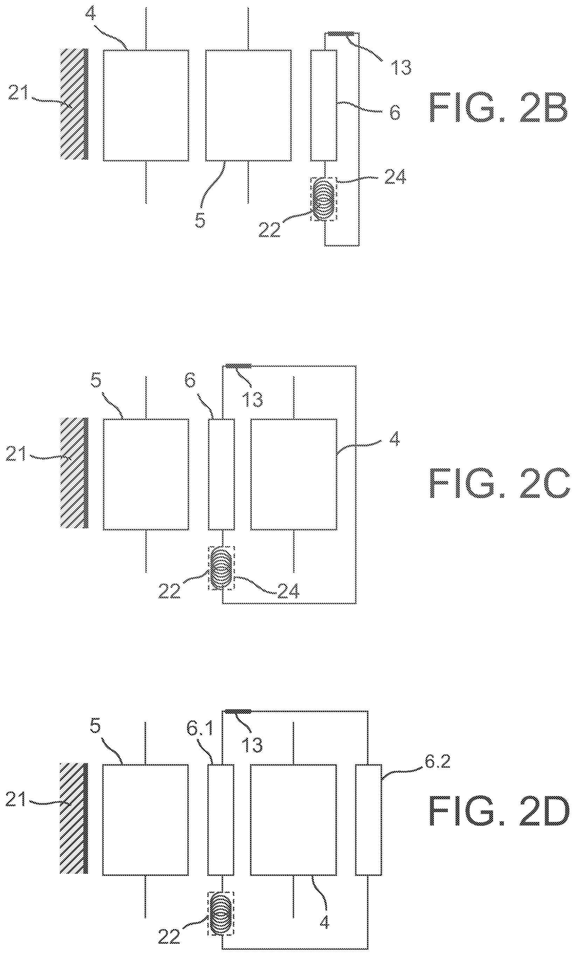

Il se peut que l'inductance de fuite obtenue grâce à la présence de l'enroulement secondaire supplémentaire ne soit pas suffisante. Une solution pour augmenter la valeur de l'inductance de fuite est de monter en série avec chacun des enroulements secondaires supplémentaires 6 une bobine d'inductance complémentaire 22 qui est placée à l'extérieur de la paire primaire-secondaire du transformateur, c'est-à-dire à l'extérieur des enroulements bobinés sur le circuit magnétique commun 21. Ces bobines d'inductance 22 sont illustrées sur les figures 2A, 2B. Elles se trouvent toutefois dans la cuve 11 du transformateur. Ces bobines d'inductance complémentaires 22 seront dimensionnées thermiquement et magnétiquement pour le courant correspondant à l'ondulation comme les enroulements secondaires supplémentaires.

Le choix de la tension aux bornes de l'enroulement secondaire supplémentaire suffisamment faible vis-à-vis de la tension apparaissant aux bornes de l'enroulement secondaire de traction en mode alternatif conduit à un dimensionnement optimum de la bobine d'inductance complémentaire.

La valeur de l'inductance de lissage est la somme de l'inductance de fuite entre l'enroulement secondaire de traction et l'enroulement secondaire supplémentaire et de l'inductance de la bobine d'inductance complémentaire si elle est présente. La valeur de l'inductance de la bobine d'inductance complémentaire peut représenter la majorité de l'inductance de lissage désirée.

Il est préférable que la bobine d'inductance complémentaire soit de type linéaire, c'est-à-dire ne comporte pas de noyau magnétique mais soit entourée d'une enveloppe en matériau magnétique pour canaliser le flux magnétique qu'elle produit de manière à rendre la valeur de l'inductance de lissage aussi indépendante que possible de la valeur du courant de ligne. Cette enveloppe peut être une tôle d'acier magnétique. Elle est schématisée sur les figures 2A, 2B qui vont être décrites par la suite, elle porte la référence 24.

On va maintenant s'intéresser aux figures 2A à 2D qui montrent diverses variantes d'agencement des enroulements primaires 4 et secondaires 5,6 du transformateur de l'invention.

Le fait de prévoir un ou plusieurs enroulements secondaires supplémentaires 6 dans le transformateur objet de l'invention ne modifie pas ou pratiquement pas l'emplacement des enroulements primaires 4 et secondaires de traction 5. Comme dans l'art antérieur, la position et la géométrie des enroulements primaires 4 et secondaires de traction 5 sont gouvernées par le mode alternatif. Il n'y a pas de changement sur ce point.

Sur les figures 2A, 2B, 2C le transformateur est de type concentrique. On retrouve classiquement autour du circuit magnétique commun 21, pour chaque paire primaire-secondaire, un enroulement secondaire de traction 5 et un enroulement primaire 4. L'enroulement primaire 4 peut être bobiné autour de l'enroulement secondaire de traction 5 comme sur les figures 2A, 2C ou inversement comme sur la figure 2B.

L'enroulement secondaire supplémentaire 6 est à l'intérieur des enroulements 4, 5, il est inséré entre le circuit magnétique commun 21 et l'enroulement secondaire de traction 5 sur la figure 2A. Il serait inséré entre le circuit magnétique commun 21 et l'enroulement primaire 4 si l'ordre des enroulements primaire et secondaire de traction est inversé. Sur la figure 2B, il se trouve à l'extérieur des enroulements 4, 5, il est bobiné autour de l'enroulement secondaire de traction 5. Il serait bobiné autour de l'enroulement primaire 4 si l'ordre des enroulements primaire et secondaire de traction est inversé.

Pour augmenter le flux de fuite et donc l'inductance de fuite, toute autre position de l'enroulement secondaire supplémentaire est envisageable dans la mesure où cet enroulement entoure le circuit magnétique commun 21.

Il est notamment possible d'insérer l'enroulement secondaire supplémentaire 6 entre l'enroulement secondaire de traction 5 et l'enroulement primaire 4 comme sur la figure 2C. En variante, il serait envisageable que l'enroulement secondaire supplémentaire 6 se décompose en plusieurs enroulements élémentaires 6.1, 6.2 montés en série et qui se trouvent chacun dans un des endroits évoqués ci-dessus. On peut se référer à la figure 2D sur laquelle un des enroulements élémentaires 6.1 se trouve entre l'enroulement secondaire de traction 5 et le primaire 4 et un autre enroulement élémentaire 6.2 se trouve autour de l'enroulement primaire 4.

Le fait de placer l'enroulement primaire à l'extérieur de l'enroulement secondaire de traction permet que l'inductance dans l'air de l'enroulement primaire soit plus élevée que dans le cas où l'enroulement primaire est à l'intérieur. Cette disposition géométrique permet de minimiser le courant d'enclenchement.

Le fait de placer l'enroulement secondaire de traction à l'intérieur de l'enroulement primaire permet d'avoir un rendement amélioré en mode continu.

La valeur de l'inductance de fuite est obtenue à partir du flux de fuite entre enroulements. Par conséquent l'enroulement secondaire de traction parcouru par le courant continu n'est pas dimensionné pour obtenir la valeur maximale d'inductance dans l'air ce qui signifie que le flux à courant continu est minimisé, ce qui est avantageux pour la protection des personnes et des installations électriques se trouvant au voisinage.

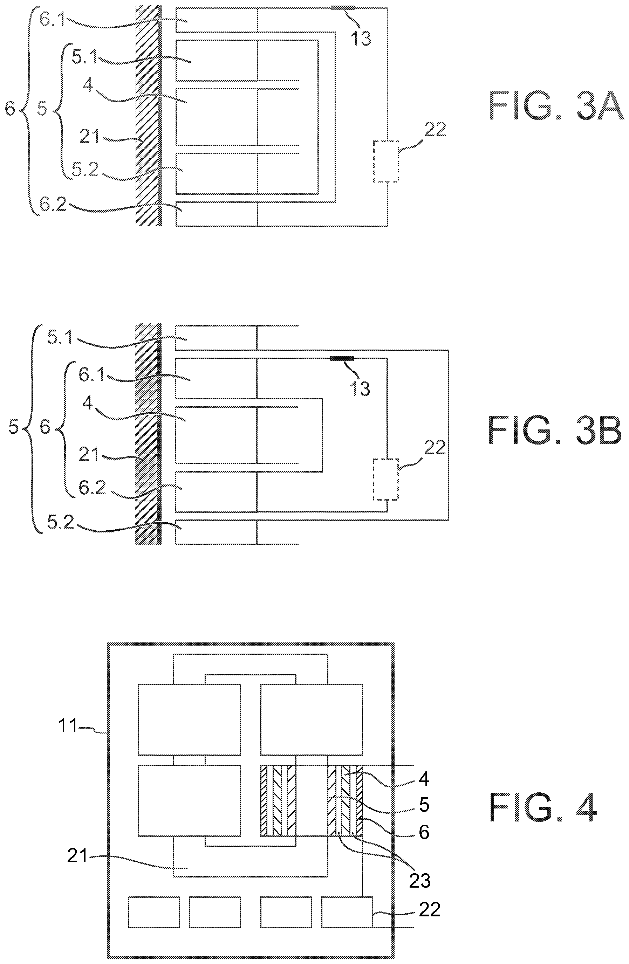

Les figures 3A, 3B illustrent des configurations possibles pour les enroulements d'un transformateur de type alterné ou bien cuirassé selon l'invention. Dans ce type de transformateur, les enroulements bobinés autour du circuit magnétique commun 21 sont empilés les uns sur les autres et forment des galettes. Dans les configurations des figures 3A, 3B l'enroulement secondaire de traction 5 est subdivisé en deux enroulements élémentaires 5.1, 5.2 montés en série ou en parallèle qui prennent en sandwich dans l'empilement l'enroulement primaire 4. Sur la figure 3A, l'enroulement secondaire supplémentaire 6 est également subdivisé en deux enroulements élémentaires 6.1, 6.2 montés en série qui se trouvent de part et d'autre de l'empilement formé de l'enroulement primaire 4 et des deux enroulements élémentaires 5.1, 5.2 de l'enroulement secondaire de traction 5. Sur la figure 3B, chacun des enroulements élémentaires 6.1, 6.2 de l'enroulement secondaire supplémentaire 6 est inséré entre l'enroulement primaire 4 et un des enroulements élémentaires 5.1, 5.2 de l'enroulement secondaire de traction 5.

La figure 4 montre une coupe d'un transformateur selon l'invention dans la configuration de la figure 2B.

La cuve 11 dans laquelle sont placés les enroulements 4, 5, 6, le circuit magnétique du transformateur 21 et les bobines d'inductance complémentaires 22 est utilisée comme blindage magnétique et est réalisée dans un matériau à perméabilité magnétique élevée tel que l'acier de manière à canaliser le flux magnétique s'échappant des enroulements du transformateur et des bobines d'inductance complémentaires.

Le transformateur comporte quatre paires primaire-secondaire 5, 6 bobinées chacune autour du circuit magnétique commun 21. Une paire d'enroulements est représentée en coupe, on distingue depuis le circuit magnétique 21 : l'enroulement secondaire de traction 5, l'enroulement primaire 4 et l'enroulement secondaire supplémentaire 6. Deux enroulements voisins sont séparés par un espace isolant 23.

On a représenté pour chaque paire primaire-secondaire une bobine d'inductance complémentaire 22 montée en série avec un enroulement secondaire supplémentaire 6 correspondant. La liaison en série n'est schématisée que pour la paire représentée en coupe.

Lorsque le transformateur comporte plusieurs paires primaire-secondaire, les enroulements secondaires de traction 5 peuvent être associés en série ou en parallèle. En mode continu, l'agencement dépend de la tension continue de la caténaire 16. Ils seront en série si la tension est de 3 kV et en parallèle si elle n'est que de 1,5 kV.

Les enroulements d'une paire primaire-secondaire sont bobinés et connectés pour que les flux magnétiques alternatifs générés par les différentes paires primaire-secondaire soient tous dans le même sens afin de circuler en boucle dans le circuit magnétique commun 21.

En mode continu, pour chaque secondaire, il y a une superposition du flux continu résultant du passage du courant continu de ligne à travers l'enroulement secondaire de traction 5 et du flux alternatif résultant de l'ondulation du courant continu de ligne. Le flux alternatif est négligeable par rapport au flux continu étant donné la grande différence d'amplitude des courants respectifs.

On s'assure seulement que le mode de connexion des différents enroulements secondaires de traction 5 soit compatible avec la circulation du flux alternatif. Les enroulements secondaires de traction 5 des différentes paires primaire-secondaire auront leurs extrémités homologues connectées en phase ou en opposition de phase selon que les flux continus qu'ils génèrent doivent s'ajouter ou se soustraire et ce que les enroulements secondaires de traction soient en série ou en parallèle.

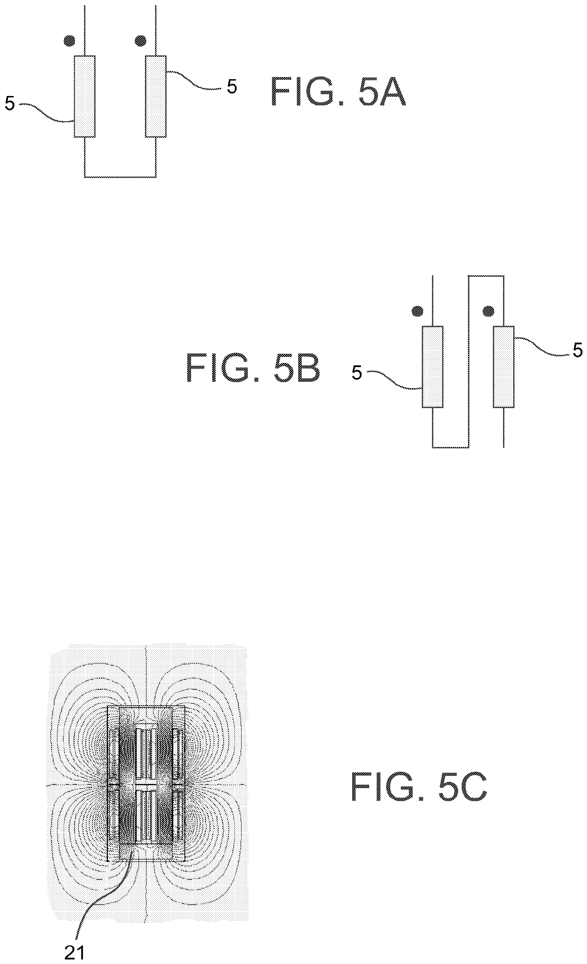

Les figures 5A et 5B représentent les branchements en série de deux enroulements secondaires de traction du transformateur de l'invention dans le cas d'une soustraction de flux et d'une addition de flux respectivement. Les extrémités homologues des enroulements sont identifiées par le point noir.

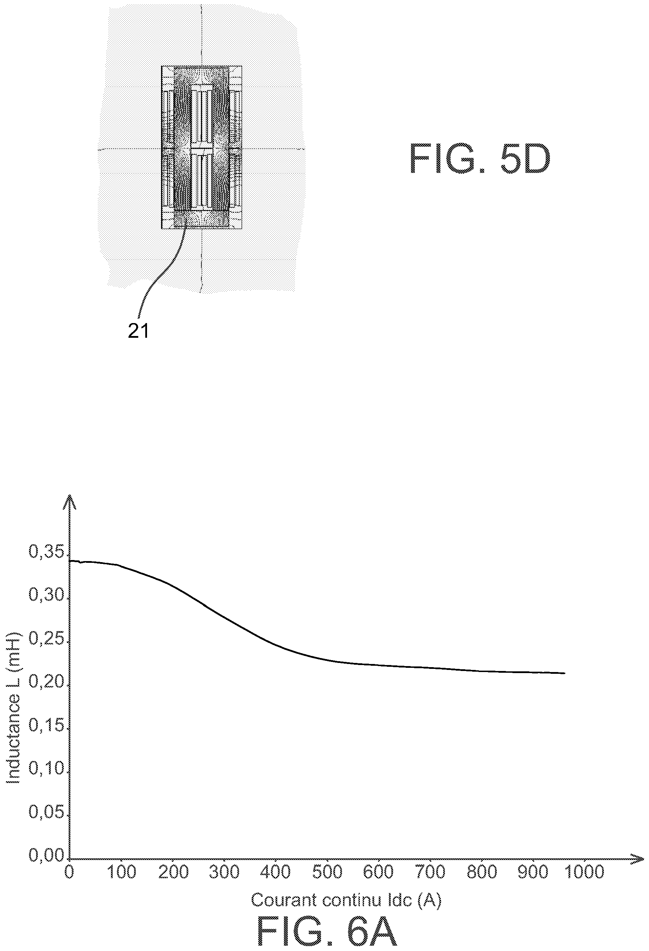

Les figures 5C et 5D représentent les flux magnétiques générés par les quatre enroulements secondaires de traction du transformateur de la figure 4, ces flux sont soustractifs sur la figure 5C et additifs sur la figure 5D.

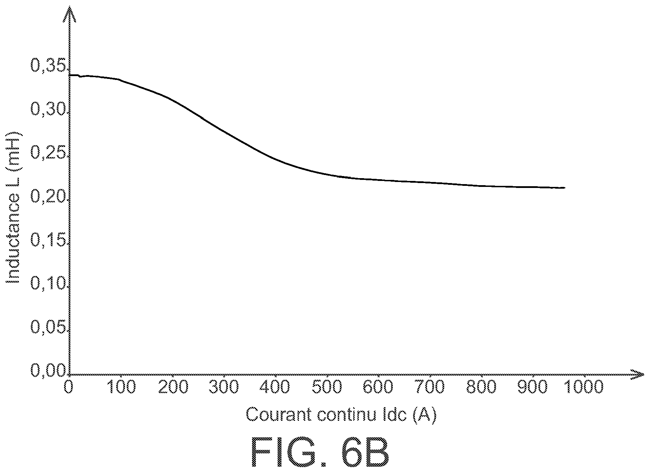

Dans ce type de transformateur, l'association de l'enroulement secondaire de traction et de l'enroulement secondaire supplémentaire associé éventuellement à la bobine d'inductance complémentaire conduit à un transformateur dit de lissage. Ce transformateur présente en mode continu une faible variation de valeur d'impédance en fonction du courant de ligne ainsi qu'une identité ou une quasi identité des valeurs d'inductances qu'il contribue à alimenter une ou plusieurs chaînes de traction. On peut se référer aux figures 6A et 6B qui montrent l'identité ou la quasi identité de variation de l'impédance du transformateur en fonction de la variation du courant continu de ligne.

L'utilisation d'un tel transformateur dans un circuit d'alimentation d'un véhicule moteur multicourant permet en supprimant la bobine d'inductance de lissage séparée de diminuer la masse et l'encombrement, apporte un gain en temps de fabrication, en matière, en coût ainsi qu'une réduction du volume du diélectrique contenu dans la cuve, ce qui réduit l'impact environnemental de l'appareil.

## Revendications

1. Transformateur conçu pour véhicule moteur multicourant comportant au moins une paire primaire-secondaire (4, 5, 6) dont le secondaire comporte au moins un enroulement secondaire de traction (5) destiné à être relié aux bornes d'un circuit de régulation et de commande (7) du moteur, et le secondaire comporte de plus un enroulement secondaire supplémentaire (6), **caractérisé en ce que** l'enroulement secondaire supplémentaire (6) est configuré en circuit ouvert avec une extrémité reliée à un potentiel de masse ou destiné à être connecté à une charge (25), en mode alternatif, alors que le primaire (4) est alimenté en courant alternatif et configuré en court-circuit en mode continu alors que l'enroulement secondaire de traction (5) est alimenté en courant continu et que le primaire (4) est configuré en circuit ouvert, cet enroulement secondaire supplémentaire (6), en coopérant avec l'enroulement secondaire de traction (5) générant une inductance de fuite qui a un rôle d'inductance de lissage d'ondulations affectant le courant continu.

2. Transformateur selon la revendication 1, dans lequel l'enroulement secondaire supplémentaire (6) est monté en série avec une bobine d'inductance (22) complémentaire qui contribue au lissage des ondulations du courant continu.

3. Transformateur selon la revendication 2, dans lequel la bobine d'inductance complémentaire (22) est linéaire.

4. Transformateur selon l'une des revendications 2 ou 3, dans lequel la paire primaire-secondaire (4, 5, 6) est bobinée autour d'un circuit magnétique commun (21), mais pas la bobine d'inductance complémentaire (22).

5. Transformateur selon l'une des revendications 2 à 4, dans lequel la paire primaire-secondaire (4, 5, 6) est contenue ainsi que la bobine d'inductance complémentaire (22) dans une cuve (11) en un matériau à perméabilité magnétique élevée tel que l'acier.

6. Transformateur selon l'une des revendications 1 à 5, dans lequel un contacteur (13) monté en série avec l'enroulement secondaire supplémentaire (6) permet de passer du circuit ouvert au court-circuit.

7. Transformateur selon l'une des revendications 1 à 6, dans lequel la paire primaire-secondaire (4, 5, 6) est de type concentrique, l'enroulement primaire (4) étant bobiné autour de l'enroulement secondaire de traction (5) ou inversement.

8. Transformateur selon la revendication 7, dans lequel l'enroulement secondaire supplémentaire (6) est bobiné autour de l'enroulement secondaire de traction (5) et/ou autour de l'enroulement primaire (4).

9. Transformateur selon l'une des revendications 7 ou 8, dans lequel l'enroulement secondaire supplémentaire (6) est entouré par l'enroulement secondaire de traction (5) et/ou par l'enroulement primaire (4).

10. Transformateur selon l'une des revendications 7 à 9, dans lequel l'enroulement secondaire supplémentaire (6) est inséré entre l'enroulement secondaire de traction (5) et l'enroulement primaire (4).

11. Transformateur selon l'une des revendications 1 à 6, dans lequel la paire primaire-secondaire (4, 5, 6) est de type empilé, l'enroulement secondaire de traction (5) s'étendant de part et d'autre de l'enroulement primaire (4).

12. Transformateur selon la revendication 11, dans lequel l'enroulement secondaire supplémentaire (6) s'étend de part et d'autre de l'enroulement secondaire de traction (5) et/ou s'étend de part et d'autre de l'enroulement primaire (4) entre l'enroulement primaire (4) et l'enroulement secondaire de traction (5).

13. Transformateur selon l'une des revendications 1 à 13, dans lequel un contacteur (17) est relié à l'enroulement primaire (4) permettant la configuration en circuit ouvert.

## Patentansprüche

1. Transformator, der für ein Mehrstrom-Motorfahrzeug konzipiert ist, mindestens ein Primär-/Sekundärteilpaar (4, 5, 6) umfassend, wobei das Sekundärteil mindestens eine Traktionssekundärwicklung (5) umfasst, die dazu bestimmt ist, an die Anschlüsse einer Regel- und Steuerschaltung (7) des Motors angeschlossen zu werden, und das Sekundärteil darüber hinaus eine zusätzliche Sekundärwicklung (6) umfasst, **dadurch gekennzeichnet, dass** die zusätzliche Sekundärwicklung (6) mit einem an ein Massepotential angeschlossenen Ende leerlaufkonfiguriert oder dazu bestimmt ist, in einer Wechselstrombetriebsart auf eine Last (25) aufgeschaltet zu werden, während das Primärteil (4) mit Wechselstrom gespeist wird und in der Gleichstrombetriebsart kurzschlusskonfiguriert ist, während die Traktionssekundärwicklung (5) mit Gleichstrom gespeist wird, und dass das Primärteil (4) leerlaufkonfiguriert ist, wobei diese zusätzliche Sekundärwicklung (6), indem sie mit der Traktionssekundärwicklung (5) zusammenwirkt, eine Streuinduktivität erzeugt, der eine Induktivitätsrolle zur Glättung von Welligkeiten zukommt, die den Gleichstrom beeinflussen.

2. Transformator nach Anspruch 1, wobei die zusätzliche Sekundärwicklung (6) mit einer komplementären Drosselspule (22) in Reihe geschaltet ist, die zur Glättung der Welligkeiten des Gleichstroms beiträgt.

3. Transformator nach Anspruch 2, wobei die komplementäre Drosselspule (22) linear ist.

4. Transformator nach einem der Ansprüche 2 oder 3, wobei das Primär-/Sekundärteilpaar (4, 5, 6) um eine gemeinsame Magnetschaltung (21) aber nicht die komplementäre Drosselspule (22) gewickelt ist.

5. Transformator nach einem der Ansprüche 2 bis 4, wobei das Primär-/Sekundärteilpaar (4, 5, 6) sowie die komplementäre Drosselspule (22) in einem Behälter (11) aus einem Material mit hoher magnetischen Durchlässigkeit wie etwa Stahl eingeschlossen ist.

6. Transformator nach einem der Ansprüche 1 bis 5, wobei es ein mit der zusätzlichen Sekundärwicklung (6) in Reihe geschaltetes Schütz (13) ermöglicht, vom Leerlauf zum Kurzschluss überzugehen.

7. Transformator nach einem der Ansprüche 1 bis 6, wobei das Primär-/Sekundärteilpaar (4, 5, 6) vom konzentrischen Typ ist, wobei die Primärwicklung (4) um die Traktionssekundärwicklung (5) gewickelt ist, oder umgekehrt.

8. Transformator nach Anspruch 7, wobei die zusätzliche Sekundärwicklung (6) um die Traktionssekundärwicklung (5) und/oder um die Primärwicklung (4) gewickelt ist.

9. Transformator nach einem der Ansprüche 7 oder 8, wobei die zusätzliche Sekundärwicklung (6) von der Traktionssekundärwicklung (5) und/oder von der Primärwicklung (4) umgeben ist.

10. Transformator nach einem der Ansprüche 7 bis 9, wobei die zusätzliche Sekundärwicklung (6) zwischen der Traktionssekundärwicklung (5) und der Primärwicklung (4) eingesetzt ist.

11. Transformator nach einem der Ansprüche 1 bis 6, wobei das Primär-/Sekundärteilpaar (4, 5, 6) vom gestapelten Typ ist, wobei sich die Traktionssekundärwicklung (5) beidseits der Primärwicklung (4) erstreckt.

12. Transformator nach Anspruch 11, wobei sich die zusätzliche Sekundärwicklung (6) beidseits der Traktionssekundärwicklung (5) erstreckt und/oder sich beidseits der Primärwicklung (4) zwischen der Primärwicklung (4) und der Traktionssekundärwicklung (5) erstreckt.

13. Transformator nach einem der Ansprüche 1 bis 13, wobei ein die Leerlaufkonfiguration ermöglichendes Schütz (17) an die Primärwicklung (4) angeschlossen ist.

## Claims

1. A transformer designed for a multi-current motor vehicle, comprising at least one primary-secondary pair (4, 5, 6), the secondary of which comprises at least one secondary traction winding (5) intended to be connected to the terminals of a circuit (7) for regulating and controlling the motor, and the secondary further comprises an additional secondary winding (6), **characterised in that** said additional secondary winding (6) is configured as an open circuit in alternating current mode with one end connected to an earth potential or is intended to be connected to a charge (25), while said primary (4) is fed with alternating current and is configured as a short-circuit in direct current mode, while said secondary traction winding (5) is fed with direct current and said primary (4) is configured as an open circuit, said additional secondary winding (6), by cooperating with said secondary traction winding (5), generating a leakage inductance, which acts as an inductor for smoothing ripples affecting the direct current.

2. The transformer according to claim 1, wherein said additional secondary winding (6) is mounted in series with an additional inductor coil (22) that contributes to the smoothing of the ripples of the direct current.

3. The transformer according to claim 2, wherein said additional inductor coil (22) is linear.

4. The transformer according to claim 2 or 3, wherein said primary-secondary pair (4, 5, 6) is wound around a common magnetic circuit (21), but the additional inductor coil (22) is not.

5. The transformer according to any one of claims 2 to 4, wherein said primary-secondary pair (4, 5, 6) and said additional inductor coil (22) are housed in a vessel (11) made of a material with high magnetic permeability such as steel.

6. The transformer according to any one of claims 1 to 5, wherein a contactor (13) mounted in series with said additional secondary winding (6) allows switching from the open circuit to the short-circuit.

7. The transformer according to any one of claims 1 to 6, wherein said primary-secondary pair (4, 5, 6) is of the concentric type, the primary winding (4) being wound around said secondary traction winding (5) or vice versa.

8. The transformer according to claim 7, wherein said additional secondary winding (6) is wound around said secondary traction winding (5) and/or around said primary winding (4).

9. The transformer according to claim 7 or 8, wherein said additional secondary winding (6) is surrounded by said secondary traction winding (5) and/or by said primary winding (4).

10. The transformer according to any one of claims 7 to 9, wherein said additional secondary winding (6) is inserted between said secondary traction winding (5) and said primary winding (4).

11. The transformer according to any one of claims 1 to 6, wherein said primary-secondary pair (4, 5, 6) is of the stacked type, said secondary traction winding (5) extending either side of said primary winding (4).

12. The transformer according to claim 11, wherein said additional secondary winding (6) extends either side of said secondary traction winding (5) and/or extends either side of said primary winding (4) between said primary winding (4) and said secondary traction winding (5).

13. The transformer according to any one of claims 1 to 13, wherein a contactor (17) is connected to said primary winding (4) allowing the open circuit configuration.
